# EUROPEAN PATENT APPLICATION

(11) **EP 3 893 183 A1**
(43) Date of publication of application: **13.10.2021**
(21) Application number: 19885485.3
(22) Date of filing: 26.07.2019
(51) Int. Cl.: G06Q 30/02, G06Q 30/06

(54) **DIRECT TRANSACTION PLATFORM SYSTEM, ADVERTISING METHOD USING DIRECT TRANSACTION PLATFORM, AND COMPUTER PROGRAM THEREFOR**

(30) Priority: 12.11.2018 KR 20180137810
(71) Applicant: Danggeun Market Inc., Seoul 06232 (KR)
(72) Inventor: KIM, Hyun Hak, Seongnam-Si Gyeonggi-do 13485 (KR); KIM, Jae Hyun, Seoul 05501 (KR); KIM, Yong Hyun, Seoul 06269 (KR)
(74) Representative: RGTH
(86) International application number: PCT/KR2019/009340
(87) International publication number: WO 2020/101144

(57) **Abstract**

A direct transaction platform system may comprise: a map storage unit configured to store information on at least one area defined by a predetermined division; an area verification unit configured to communicate with a user device of at least one user to receive location information of the user device from the user device, and to determine a verified area from among the at least one area for each of the at least one user, using the received location information; an advertisement reception unit configured to receive advertisement information and information on a target area where the advertisement information is to be exposed from a user device of an advertising user, and to restrict the target area on the basis of a degree of proximity to the verified area determined for the advertising user by the area verification unit; and a transaction provision unit configured to expose the advertisement information to a target user for whom the target area is determined to be the verified area, among the at least one user.

## Description

### FIELD OF THE INVENTION

Embodiments of the present invention relate to a direct transaction platform system, an advertising method using a direct transaction platform, and a computer program therefor, and more particularly to a technique for allowing a user to verify an area where the user is located and advertise within the vicinity of the verified area using a direct transaction platform, thereby increasing the reliability and efficiency of the advertising.

### BACKGROUND OF THE INVENTION

With the development of information and communication technology, transactions of items between individuals are shifting from existing offline marketplaces to online marketplaces. In general, online transactions of used items between individuals are conducted such that a seller and a buyer negotiate a price and a transaction location through an online bulletin board, or obtain contact information through the online bulletin board or the like and contact each other by telephone or text messages to negotiate necessary matters. In addition, as second-hand transactions are conducted online, advertising for communities or websites that provide second-hand transaction services is also actively conducted.

Since the identities of transaction counterparties cannot be checked in online transactions between individuals, small-value fraud frequently occurs in trading used items. Particularly, the most preferred transaction method for trading a used item is a direct transaction in which a seller and a buyer meet up in person and exchange the item and money. However, when a transaction is conducted without the knowledge of locations of the transaction counterparties, there is a problem that the counterparties who cannot conduct a direct transaction consume unnecessary time, or there is a risk of fraud by a malicious user.

As a conventional technique for solving this problem, Korean Registered Patent No. 10-1658696 discloses a technique for verifying a seller and a buyer on the basis of whether location information of mobile phones of the seller and buyer matches with an offline transaction location. However, the technique disclosed in Korean Registered Patent No. 10-1658696 merely checks whether the location information of the mobile phones of the users matches with the transaction location, and has limitations in that the location information cannot be utilized for an advertising action or the like rather than a one-to-one transaction between the seller and buyer.

### SUMMARY OF THE INVENTION

According to one aspect of the invention, there may be provided a direct transaction platform system for allowing a user to verify an area where the user is located and advertise within the vicinity of the verified area using a direct transaction platform, thereby increasing the reliability and efficiency of the advertising, an advertising method using the direct transaction platform, and a computer program therefor.

A direct transaction platform system according to one embodiment of the invention comprises: a map storage unit configured to store information on at least one area defined by a predetermined division; an area verification unit configured to communicate with a user device of at least one user to receive location information of the user device from the user device, and to determine a verified area from among the at least one area for each of the at least one user, using the received location information; an advertisement reception unit configured to receive advertisement information and information on a target area where the advertisement information is to be exposed from a user device of an advertising user, and to restrict the target area on the basis of a degree of proximity to the verified area determined for the advertising user by the area verification unit; and a transaction provision unit configured to expose the advertisement information to a target user for whom the target area is determined to be the verified area, among the at least one user.

According to one embodiment of the invention, the at least one area includes at least one first area defined by a first division, and at least one second area defined by a second division smaller than the first division.

Here, the advertisement reception unit is further configured to present the advertising user with an area corresponding to a division selected by the advertising user, among the first area and the second area, to allow selection of the target area.

According to one embodiment of the invention, the advertisement reception unit is further configured to present the advertising user with the first area in a predetermined number when the advertising user selects the first division, and to present the advertising user with the second area in a number greater than the predetermined number when the advertising user selects the second division.

According to one embodiment of the invention, the advertisement reception unit is further configured to sort and present the advertising user with the at least one area in order of proximity to the verified area of the advertising user to allow selection of the target area.

According to one embodiment of the invention, the transaction provision unit is further configured to receive transaction information including a transaction request or item information for a direct transaction from the at least one user, and to provide the advertisement information to the target user together with the transaction information received from other users by the transaction provision unit.

According to one embodiment of the invention, the advertisement information includes category information of an advertised item. Here, the advertisement reception unit is further configured to change a reference value of the degree of proximity for determining the target area on the basis of the category information.

According to one embodiment of the invention, the area verification unit is further configured to request the location information for determining the verified area from the user device of the at least one user, when a predetermined amount of time elapses after the verified area is determined for the at least one user.

An advertising method using a direct transaction platform according to one embodiment of the invention comprises the steps of: storing, in a direct transaction platform system, information on at least one area defined by a predetermined division; communicating, by the direct transaction platform system, with a user device of at least one user to receive location information of the user device from the user device; determining, by the direct transaction platform system, a verified area from among the at least one area for each of the at least one user, using the received location information; receiving, by the direct transaction platform system, advertisement information and information on a target area where the advertisement information is to be exposed from a user device of an advertising user; and exposing, by the direct transaction platform system, the advertisement information to a target user for whom the target area is determined to be the verified area, among the at least one user.

Here, the step of receiving the information on the target area comprises the step of restricting the target area on the basis of a degree of proximity to the verified area determined for the advertising user.

According to one embodiment of the invention, the at least one area includes at least one first area defined by a first division, and at least one second area defined by a second division smaller than the first division.

Here, the step of receiving the information on the target area comprises the step of presenting, by the direct transaction platform system, the advertising user with an area corresponding to a division selected by the advertising user, among the first area and the second area, to allow selection of the target area.

According to one embodiment of the invention, the presenting step comprises the step of presenting the advertising user with the first area in a predetermined number when the advertising user selects the first division, and presenting the advertising user with the second area in a number greater than the predetermined number when the advertising user selects the second division.

According to one embodiment of the invention, the step of receiving the information on the target area comprises the step of sorting and presenting the advertising user with the at least one area in order of proximity to the verified area of the advertising user to allow selection of the target area.

The advertising method according to one embodiment of the invention further comprises the step of receiving, by the direct transaction platform system, transaction information including a transaction request or item information for a direct transaction from the at least one user. Here, the step of exposing the advertisement information comprises the step of providing the advertisement information to the target user together with the transaction information received from other users by the direct transaction platform system.

According to one embodiment of the invention, the advertisement information includes category information of an advertised item. Here, the step of restricting the target area comprises the step of changing a reference value of the degree of proximity for determining the target area on the basis of the category information.

The advertising method according to one embodiment of the invention further comprises the step of requesting, by the direct transaction platform system, the location information for determining the verified area from the user device of the at least one user, when a predetermined amount of time elapses after the verified area is determined for the at least one user.

A computer program according to one embodiment of the invention is stored on a computer-readable recording medium to execute the advertising method according to the above embodiments of the invention in combination with hardware.

By using the direct transaction platform system and the advertising method using the direct transaction platform according to one aspect of the invention, a user may verify his/her area using his/her user device such as a smart phone, and when the user desires to post an advertisement for other users, it is possible to advertise only within a range limited to the user's verified area.

By means of the direct transaction platform system and the advertising method using the direct transaction platform according to one aspect of the invention, a user who desires to advertise should verify his/her area and may advertise only in adjacent areas of the verified area, thereby increasing the reliability of the advertising. Further, since the advertising is conducted in the adjacent areas of the advertiser, users who have viewed the advertising may contact the advertiser or visit the advertiser's store so that the advertising will be likely to induce a purchasing action, thereby increasing the efficiency of the advertising compared to the prior art.

### BRIEF DESCRIPTION OF THE DRAWINGS

FIG. 1 schematically shows a block diagram of a direct transaction platform system according to one embodiment of the invention.
FIG. 2 shows a flowchart of an advertising method using a direct transaction platform according to one embodiment of the invention.
FIG. 3 conceptually shows area divisions by a direct transaction platform system according to one embodiment of the invention.
FIGS. 4A and 4B conceptually show exemplary user interfaces by which advertisement information is inputted to a direct transaction platform system according to one embodiment of the invention.
FIG. 5 conceptually shows an exemplary user interface for displaying a form in which advertisement information is exposed by a direct transaction platform system according to one embodiment of the invention.

### DETAILED DESCRIPTION OF THE INVENTION

Hereinafter, embodiments of the present invention will be described in detail with reference to the drawings.

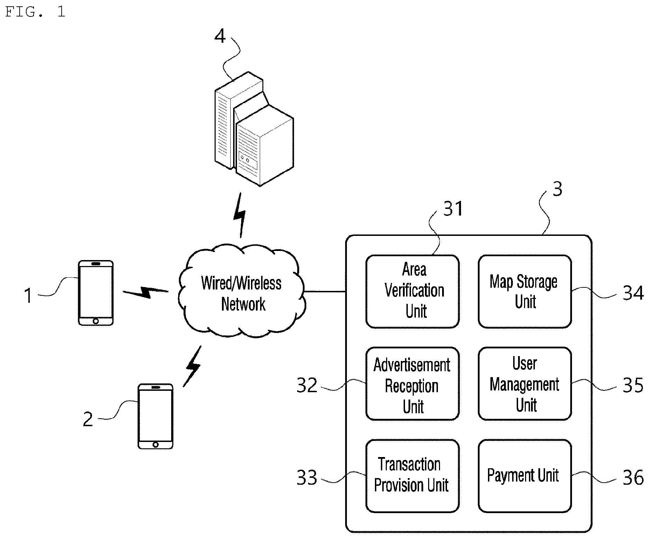

FIG. 1 schematically shows a block diagram of a direct transaction platform system according to one embodiment of the invention.

According to one embodiment of the invention, a direct transaction platform system 3 comprises an area verification unit 31, an advertisement reception unit 32, a transaction provision unit 33, and a map storage unit 34. According to one embodiment of the invention, the direct transaction platform system 3 further comprises a user management unit 35. In addition, according to one embodiment of the invention, the direct transaction platform system 3 further comprises a payment unit 36.

The direct transaction platform system 3 according to the embodiments of the invention may entirely have aspects of hardware, or may partly have aspects of hardware and partly have aspects of software. For example, each unit included in the direct transaction platform system 3 may refer to hardware and related software for processing data having specific formats and contents and/or exchanging the data in a manner of electronic communication. Herein, terms such as "unit", "module", "device", "terminal", "server", or "system" are intended to refer to a combination of hardware and software operated by the hardware. For example, the hardware may refer to a data processing device including a CPU or other processors. Further, the software operated by the hardware may refer to a process in execution, an object, an executable file, a thread of execution, a program, or the like.

Further, the respective components constituting the direct transaction platform system 3 according to the embodiments of the invention are not necessarily intended to refer to distinct devices physically separated from each other. That is, the area verification unit 31, the advertisement reception unit 32, the transaction provision unit 33, the map storage unit 34, the user management unit 35, and the payment unit 36 in FIG. 1 are only functionally classified according to the operations performed by the hardware constituting the direct transaction platform system 3, and the respective components do not necessarily have to be provided independently of each other. Of course, depending on the embodiments, it is also possible to implement at least one of the area verification unit 31, the advertisement reception unit 32, the transaction provision unit 33, the map storage unit 34, the user management unit 35, and the payment unit 36 as a physically separated distinct device.

The direct transaction platform system 3 may operate communicating with one or more user devices 1 and 2 via a wired and/or wireless network. Further, the direct transaction platform system 3 may communicate with at least one external server 4 as necessary. The communication scheme via the wired and/or wireless network may encompass any communication scheme through which objects can be networked, and is not limited to wired communication, wireless communication, 3G, 4G, or other schemes.

For example, the wired and/or wireless network may refer to, but is not limited to, a communication network based on at least one communication scheme selected from a group consisting of a LAN (Local Area Network), MAN (Metropolitan Area Network, GSM (Global System for Mobile Network), EDGE (Enhanced Data GSM Environment), HSDPA (High Speed Downlink Packet Access), W-CDMA (Wideband Code Division Multiple Access), CDMA (Code Division Multiple Access), TDMA (Time Division Multiple Access), Bluetooth, Zigbee, Wi-Fi, VoIP (Voice over Internet Protocol), LTE (Long Term Evolution) Advanced, IEEE 802.16m, WirelessMAN-Advanced, HSPA+, 3GPP LTE, Mobile WiMAX (IEEE 802.16e), UMB (formerly EV-DO Rev. C), Flash-OFDM, iBurst and MBWA (IEEE 802.20) system, HIPERMAN, BDMA (Beam-Division Multiple Access), Wi-MAX (World Interoperability for Microwave Access), and ultrasonic communication.

The user devices 1 and 2 are devices used by users who desire to buy or sell used items through the direct transaction platform system 3. Although each of the user devices 1 and 2 is shown in the form of a smart phone in FIG. 1, it is not limited thereto and may be implemented in the form of any other type of mobile communication terminal or any computing device such as a personal computer, a personal digital assistant (PDA), a tablet computer, and a set-top box for Internet Protocol Television (IPTV).

Further, it will be readily understood that the number of the user devices 1 and 2 shown in FIG. 1 is merely an example for convenience of illustration, and does not represent the actual number of sellers or buyers who use the direct transaction platform system 3. That is, the direct transaction platform system 3 may register items sold by a plurality of sellers and sell the items to a plurality of buyers.

The direct transaction platform system 3 may function as an application service server that is accessible using an application (or app) running on the user device 1 or 2 and enables the functions of the application. Alternatively, the direct transaction platform system 3 may function as a web server for providing web pages that are accessible using a web browser running on the user device 1 or 2.

The map storage unit 34 of the direct transaction platform system 3 stores information on one or more areas defined by predetermined divisions. The divisions are intended to allow the user of the user device 1 or 2 to verify his/her area for a transaction. According to one embodiment of the invention, the map storage unit 34 may receive original map data for the divisions from the external server 4.

The area verification unit 31 may communicate with the user device 1 or 2 to receive location information of the user device 1 or 2, and may verify a specific area divided on the basis of the received location information as an area of the user corresponding to the user device 1 or 2. For example, the location information of the user device 1 or 2 received by the area verification unit 31 may be obtained by a global positioning system (GPS) device provided in the user device 1 or 2. According to one embodiment of the invention, the user may also verify a plurality of areas as his/her transaction areas according to the number determined by the direct transaction platform system 3.

According to one embodiment of the invention, the verification of the user's area by the area verification unit 31 may be temporary. That is, when a predetermined amount of time elapses after the user verifies his/her area, the area verification unit 31 may request the location information for determining the verified area from the user device 1 or 2 again.

The advertisement reception unit 32 is configured to receive advertisement information and information on a target area where an advertisement is to be exposed from a user device of an advertising user who desires to post the advertisement among users using the direct transaction platform system 3. Herein, the operations of the direct transaction platform system 3 according to the embodiments of the invention will be described on the assumption that the first user device 1 is a device used by the advertising user and the second user device 2 is a user device of a general user (i.e., a direct seller or a direct buyer) who is to view the advertisement of the advertising user.

The advertisement information received by the advertisement reception unit 32 may include information on a name and price of an advertised item, an image of the advertised item, one or more categories related to the advertised item, an exposure period of the advertisement, a number of repeated exposures of the advertisement (e.g., a maximum number of times one person can view the advertisement), and the like. Further, the information on the target area where the advertisement is to be exposed defines verified areas of the users who are to view the advertisement, and may include information on one or more divisional areas.

Here, the advertisement reception unit 32 restricts the number and/or range of advertisement target areas on the basis of the degree of proximity to the verified area of the advertising user. For example, the advertisement reception unit 32 may expose the advertisement only in adjacent areas located within a predetermined distance from the verified area of the advertising user, and/or may expose the advertisement only within a limited number of areas in order of proximity to the verified area of the advertising user. Here, the size of a division for defining the target area of the advertisement may vary. For example, the target area may be defined by neighborhood, by district, or by city. Further, the number of areas where the advertisement is available may differ depending on the size of the division for defining the target area.

The transaction provision unit 35 is a unit for realizing direct transactions between users via the direct transaction platform system 3. That is, the transaction provision unit 35 may expose sale information registered by a seller who uses the direct transaction platform system 3 to potential buyers located in the seller's verified area. Further, the transaction provision unit 35 may expose purchase information registered by a buyer who uses the direct transaction platform system 3 to potential sellers located in the buyer's verified area. Here, the purchase information and the sale information may include information on a name and price of an item desired to be bought or sold, an image of the item, one or more categories of the item, and the like, and information on a transaction area desired by the seller or buyer.

The user management unit 35 serves to manage information on transaction results and/or ratings of other users for each user who uses the direct transaction platform system 3. According to one embodiment of the invention, the information on the transaction results and/or rating of each user managed by the user management unit 35 may be used to restrict an advertising range or influence an advertising price when the user is an advertising user and desires to post an advertisement for other users, which will be described in detail below.

The payment unit 36 is a unit for processing payment for an advertising fee according to a request of an advertising user who desires to post advertisement information. For the payment processing, the payment unit 36 may communicate with a financial company server (not shown) or a value-added network (VAN) company server (not shown) as well as the user device 1 or 2.

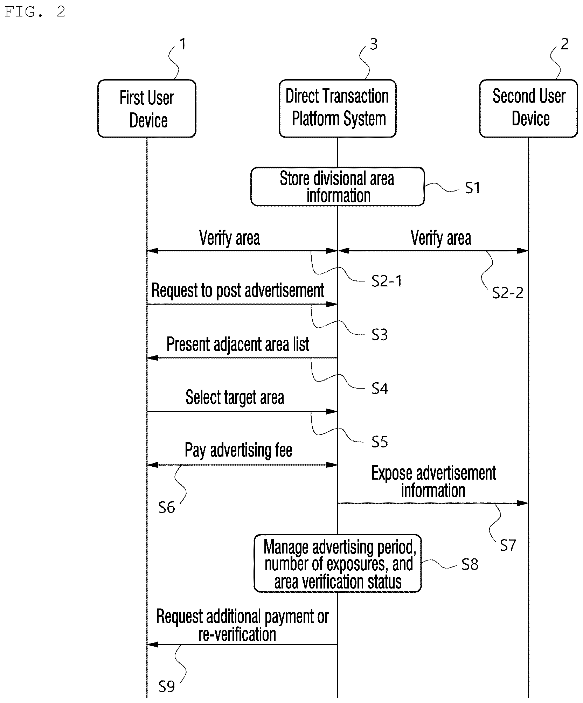

FIG. 2 shows a flowchart of an advertising method using a direct transaction platform according to one embodiment of the invention. For convenience of illustration, the advertising method according to the present embodiment will be described with reference to FIGS. 1 and 2.

First, divisional area information may be stored in the map storage unit 34 of the direct transaction platform system 3 (SI). The divisions of the area information may refer to divisions of administrative areas such as cities, provinces, and counties, or may refer to divisions of areas that are arbitrarily defined by operators of the direct transaction platform system 3 separately from the divisions of administrative areas. The original map data for the area divisions may be obtained from, but not limited to, the external server 4 (e.g., a map data server).

Next, the area verification unit 31 of the direct transaction platform system 3 may receive information on a location of the user device 1 or 2 from the user device 1 or 2 of each user, and when the received location is within a range of an area determined by each user, the area verification unit 31 may verify the area as the user's location (S2-1, S2-2). For example, a user may designate an area where the user desires to conduct a transaction by a division such as a neighborhood or a district/city, and may access the direct transaction platform system 3 and transmit his/her location at the same time as the designation or when the user arrives at the area later. When the transmitted location is within the division of the transaction area determined by the user, the area verification unit 31 of the direct transaction platform system 3 may determine the area as the user's verified area.

According to one embodiment of the invention, a user who conducts area verification may personally determine the size of a division for defining his/her verified area. For example, in verifying the user's area, the user may determine whether to determine only a specific division (e.g., a neighborhood) where the user is located as the verified area, or may determine whether to further verify an adjacent area within a predetermined distance from the division, and determine a distance for defining the adjacent area.

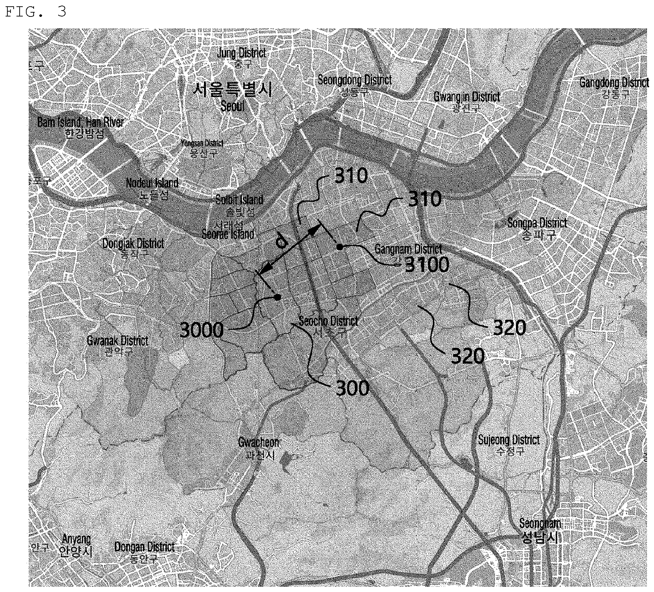

FIG. 3 conceptually shows area divisions by a direct transaction platform system according to one embodiment of the invention.

Referring to FIG. 3, an area 300 represents an area where an advertising user is currently located, and areas 310 and 320 represent adjacent areas located within a predetermined distance d from the area 300 where the user is currently located. Here, according to the user's selection, the user may determine only the area 300 where the user is currently located as a verified area, or may determine the area 300 where the user is currently located and the adjacent areas 310 and 320 as the verified area of the user. For example, the area 310 in FIG. 3 represents an adjacent area when areas located within a radius of 2 to 3 km from the area 300 where the user is currently located are determined as adjacent areas, and the area 320 represents an adjacent area when areas located within a radius of 6 to 7 km from the area 300 where the user is currently located are determined as adjacent areas. According to the user's selection, the user may determine the verified area to cover up to the adjacent area 310 within the narrower range or up to the adjacent area 320 within the wider range, and the direct transaction platform system 3 may present options to the user device 1 or 2 so that the user may input the above determination in the form of a selection.

Meanwhile, the distance for determining the adjacent area 310 located within a predetermined distance d from the area 300 where the user is currently located may be calculated with respect to a center point of each area. That is, when a distance from a center point 3000 of the area 300 to a center point 3100 of the other specific area 310 is not greater than the predetermined distance d, the area 310 may be determined as an area adjacent to the area 300. Here, the center points 3000 and 3100 of the areas 300 and 310 may refer to geometric centers of the areas 300 and 310, respectively.

Alternatively, the center points 3000 and 3100 of the areas 300 and 310 may be determined in consideration of the characteristics of facilities such as public offices or roads located in the areas 300 and 310. For example, when a major facility of the divisional area (e.g., a neighborhood community center) or a facility of a superordinate divisional area (e.g., a city hall or a district office) is located in a specific neighborhood, the location of the facility may be determined as the center point 3000 or 3100 of the neighborhood in consideration of the importance of the facility, even if the point where the facility is located is not the geometric center of the neighborhood.

The user may verify his/her area by determining a distance from his/her current location through the above-described process.

Meanwhile, referring again to FIGS. 1 and 2, an advertising user who desires to post advertisement information for other users may post an advertisement only in a limited number or range of areas on the basis of the degree of proximity to the user's verified area. In the present embodiment, the description will be made on the assumption that a first user who is the user of the first user device 1 is an advertising user who is to post advertisement information, and a second user who is the user of the second user device 2 is a user other than the advertising user. It will be readily understood that the first and second users herein are simply classified in terms of the action of posting the advertisement information for convenience of illustration, and do not refer to specific users or a user group.

First, the advertising user who has verified his/her area may request the direct transaction platform system 3 to post an advertisement (S3). The advertising user may make the request to post the advertisement by composing an article containing information on the advertisement and an area where the advertisement is to be posted for the purpose of advertising, or by choosing to advertise on the basis of an article previously composed by the user.

When the request to post the advertisement is made, the direct transaction platform system 3 may present the first user device 1 with a list of target areas where the advertisement may be posted on the basis of the verified area of the first user (S4). That is, as described above with reference to FIG. 3, communication between the first user device 1 and the direct transaction platform system 3 may be made so that a limited number of areas determined on the basis of the degree of proximity to the verified area of the first user are displayed on the user device 1. The first user may select a target area where his/her advertisement is to be posted in view of the presented list of adjacent areas (S5).

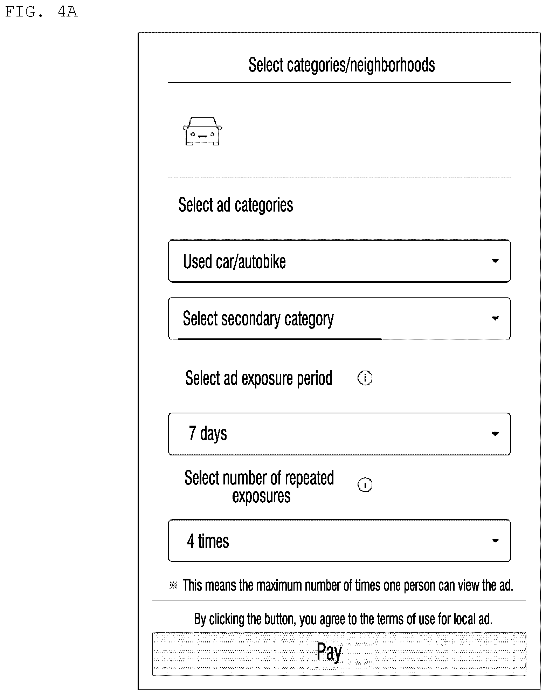

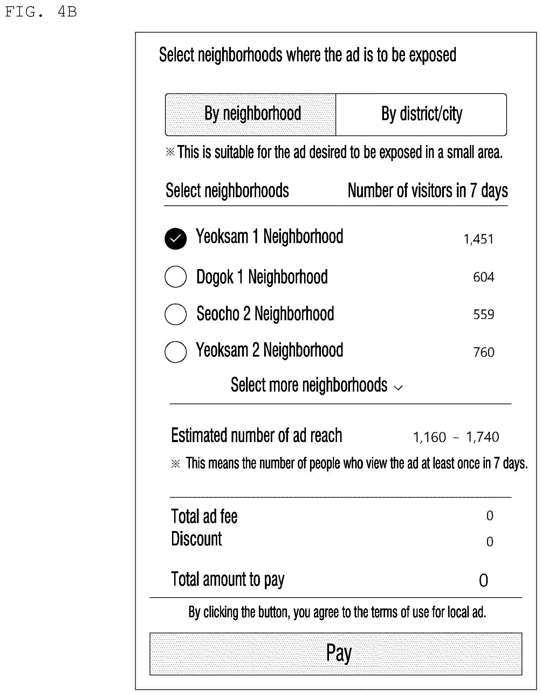

FIGS. 4A and 4B conceptually show exemplary user interfaces by which advertisement information is inputted to a direct transaction platform system according to one embodiment of the invention.

Referring to FIG. 4A, an advertising user may input a name of an item to be advertised by the advertising user and select related categories. Here, the categories may be formed in a hierarchy having one or more superordinate categories (e.g., used car/autobike) and one or more subordinate categories (e.g., 1500cc displacement) belonging thereto. Moreover, the advertising user may optionally input additional information such as an image, price, size, option, discount range, sale period, and event of the advertised item.

According to one embodiment of the invention, the advertising user may determine an exposure period and/or a number of repeated exposures of the advertisement when inputting the advertisement information. The exposure period defines a period during which the advertisement will be exposed to other users, and the number of repeated exposures defines how many times the advertisement will be repeatedly exposed to specific target users. The exposure period and the number of repeated exposures affect an advertising fee, and the advertising fee to be paid by the advertising user may be determined to increase as the exposure period and the number of repeated exposures increase.

Referring to FIG. 4B, the advertising user may determine a target area where his/her advertisement is to be exposed. As described above, the advertising user may advertise only in a limited number of adjacent areas (e.g., Dogok 1 Neighborhood, Seocho 2 Neighborhood, Yeoksam 2 Neighborhood, etc.) around an area where the advertising user has verified his/her location using the first user device 1 (e.g., Yeoksam 1 Neighborhood). Here, the direct transaction platform system may present a list of adjacent areas based on the verified area of the advertising user in order of proximity to the verified area, so that the advertising user may select one or more target areas therefrom.

The target areas included in the adjacent area list may be areas located within a predetermined distance from the verified area, which may be determined on the basis of a method of calculating a distance between the divisional areas described above with reference to FIG. 3. Alternatively, the target areas included in the adjacent area list may be top n areas (where n is an arbitrary natural number) selected on the basis of the degree of proximity to the verified area of the advertising user, among all the divisional areas included in the direct transaction platform. It will be readily understood that the number of selectable target areas shown in FIG. 4B is merely exemplary and does not limit the disclosures of the invention.

According to one embodiment of the invention, the advertising user may select a type of division for defining a target area where the advertising user desires to post the advertisement. That is, the advertising user may select at least one first area defined with a relatively large first division (e.g., by district/city) as the advertising target area, or may select at least one second area defined with a smaller second division (e.g., by neighborhood) as the advertising target area. Here, when the advertising user selects a relatively large division, the direct transaction platform system reduces the number of selectable target areas so that the advertising range cannot be expanded indefinitely. For example, the advertising user may select a maximum of 27 neighborhoods when the target area is selected by neighborhood, whereas the advertising user may select a maximum of 9 districts/cities when the target area is selected by district/city.

However, the types of divisions and the number of selectable target areas are exemplary and may be differently determined according to embodiments of the invention.

According to one embodiment of the invention, the direct transaction platform system may change a reference value of the degree of proximity related to the restriction of the advertising target area, on the basis of the category of the advertised item. That is, when the advertised item belongs to a specific category, the direct transaction platform system may determine a relatively small or large number of areas and/or a relatively closer or farther areas as the target areas compared to items of other categories, and may allow advertising in the target areas.

For example, when freshness is required for an advertised item (e.g., an agricultural/marine product) and advertising is allowed only in adjacent areas, the selectability and freshness of the item will inevitably be limited for buyers located far from a producing area of the item, and the advertiser is unreasonably deprived of the opportunity to achieve additional sales through the demand of the distant buyers. In order to solve this problem, when the advertised item is an item of a specific category such as an agricultural/marine product, the restriction on the degree of proximity of the advertising area is relaxed so that it is possible to select even a relatively distant area as the advertising target area and/or select a relatively large number of adjacent areas as the advertising target areas.

According to another embodiment of the invention, in the case of an item of a specific category such as an agricultural/marine product, a specific area where consumers are concentrated (e.g., Bundang District of Seongnam, Suji District of Yongin, Songpa District of Seoul, Gangnam District of Seoul, Seocho District of Seoul, etc.) may be selected as the target area regardless of the verified area of the advertising user.

Further, the restriction on the target area that may be selected by the advertising user may be determined in consideration of accumulated advertisement or transaction results of the advertising user and/or information on ratings of other users for the advertising user. For example, in the case of a user who has advertised in the past and received poor ratings from actual buyers or direct transaction counterparties, the restriction may be tightened such that advertising is allowed only in areas very close to the user's verified area when the user desires to post an advertisement. Conversely, in the case of an advertising user who has received good ratings from past buyers or direct transaction counterparties, the restriction on the degree of proximity may be relaxed such that advertising is allowed in areas relatively distant from the user's verified area or in a relatively large number of target areas.

When the advertising user selects the target areas of the advertisement, the direct transaction platform system may request payment by presenting an advertising fee calculated according to the range and number of the selected target areas. Here, the advertising fee may be determined to increase as the number of advertising target areas increases and/or as an area located at a relatively long distance or a division with a relatively wide range is determined as the target area.

In addition, the direct transaction platform system may present the advertising user with an estimated number of advertising reach calculated according to the range and number of the selected target areas. Since most users who use the direct transaction platform system according to the embodiments of the invention have verified their locations, the verified locations of the users and the number of accesses of the users may be used to calculate the estimated number of advertising reach by summing up the number of accesses of users within a specific area when the specific area is selected as the target area. Further, it is possible to calculate the advertising fee such that the advertising fee increases in proportion to the estimated number of advertising reach.

Referring again to FIGS. 1 and 2, the direct transaction platform system 3 may process payment of the advertising fee for the advertising user (S6). The payment processing is performed through communication between the direct transaction platform system 3 and the first user device 1 of the advertising user, and may be performed with the further involvement of an external server such as a financial company server or a VAN company server. Since common online payment methods may be applied to the payment processing without limitation, a detailed description of the payment processing will be omitted in order to clarify the gist of the invention.

When the advertisement information is received and the payment for the advertising fee is completed, the direct transaction platform system 3 may expose the advertisement information posted by the advertising user (i.e., the first user) to one or more other users (i.e., the second user) (S7). The advertisement information may be exposed such that the advertisement information is included in a list of transaction information exposed to users who conduct transactions using the direct transaction platform system 3.

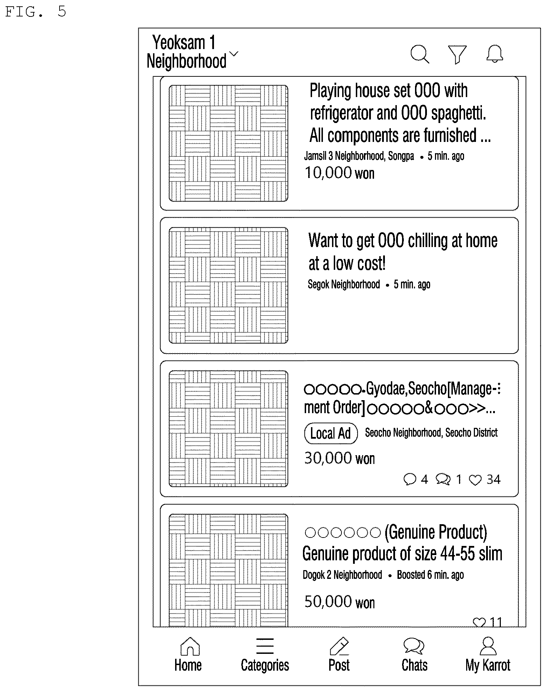

FIG. 5 conceptually shows an exemplary user interface for displaying a form in which advertisement information is exposed by a direct transaction platform system according to one embodiment of the invention.

Referring to FIG. 5, users of the direct transaction platform system according to the embodiments of the invention receive transaction information including sale information and/or purchase information uploaded by other users. The sale information includes information such as item names, prices, and transaction areas related to items sold by other users. Similarly, the purchase information includes information such as item names, prices, and transaction areas related to items that other users desire to buy. The transaction information may be shown in the form of, but not limited to, a timeline on the user device.

Here, advertisement information uploaded by an advertising user is exposed to a user whose verified area is a target area determined by the advertising user. For example, the advertisement information may be included in a timeline comprising other transaction information as shown in FIG. 5 and provided to the user together with the other transaction information. However, the exposure form of the advertisement information is not limited to that shown in FIG. 5.

Referring again to FIGS. 1 and 2, the direct transaction platform system 3 may manage an advertising period and/or a number of exposures determined for the advertisement information of the advertising user while the advertisement information is provided to other users (S8). As a result of the management, when the advertising period determined for the advertisement information has elapsed or the number of exposures determined for the advertisement information has been reached, the direct transaction platform system 3 may interrupt the advertising and notify the advertising user of the interruption, and may request additional payment of an advertising fee (S9).

Alternatively, the direct transaction platform system 3 may manage area verification status of the advertising user (S8). The area verification through the direct transaction platform system 3 may have a temporary nature, and the area verification may be canceled when a predetermined amount of time elapses after the area verification using location information of the user device 1 or 2. Here, the direct transaction platform system 3 may notify the advertising user or other users whose area verification has been canceled of the cancellation of the verification (S9), thereby inducing the users to verify their areas again. Further, when the area verification of the advertising user who has posted the advertisement is cancelled, the direct transaction platform system 3 may interrupt the advertising until the re-verification is completed.

The above advertising method using the direct transaction platform according to the embodiments of the invention has been described with reference to the flowchart in the accompanying drawings. Although the method has been shown and described as a series of blocks for simplicity of illustration, the invention is not limited to the order of the blocks and some blocks may be implemented concurrently with other blocks or in an order different from that shown and described herein. Further, various other branches, flow paths, and block orders may be implemented to achieve the same or similar results. In addition, all the illustrated blocks may not be required for implementation of the method described herein.

The operations by the advertising method using the direct transaction platform according to the above-described embodiments of the invention may be at least partially implemented as a computer program and recorded in a computer-readable recording medium. The computer-readable recording medium in which a program for implementing the operations by the advertising method using the direct transaction platform according to the embodiments of the invention is recorded includes all types of recording media in which computer-readable data are stored. Examples of the computer-readable recording medium include ROM, RAM, CD-ROM, magnetic tapes, floppy disks, and optical data storage devices. Further, the computer-readable recording medium may be distributed in network-connected computer systems, so that computer-readable codes may be stored and executed in a distributed manner. In addition, functional programs, codes, and code segments for implementing the embodiments of the invention may be easily understood by those skilled in the art to which the embodiments of the invention belong.

Although the invention has been described with reference to the embodiments shown in the drawings, it will be appreciated by those skilled in the art that the embodiments are merely exemplary and various modifications and changes may be made therefrom. However, such modifications should be considered to fall within the technical scope of the invention. Therefore, the true technical scope of the invention should be defined by the technical spirit of the appended claims.

### INDUSTRIAL APPLICABILITY

Embodiments of the invention relate to a direct transaction platform system, an advertising method using a direct transaction platform, and a computer program therefor, and more particularly to a technique for allowing a user to verify an area where the user is located and advertise within the vicinity of the verified area using a direct transaction platform, thereby increasing the reliability and efficiency of the advertising.

## Claims

1. A direct transaction platform system, comprising:
a map storage unit configured to store information on at least one area defined by a predetermined division;
an area verification unit configured to communicate with a user device of at least one user to receive location information of the user device from the user device, and to determine a verified area from among the at least one area for each of the at least one user, using the received location information;
an advertisement reception unit configured to receive advertisement information and information on a target area where the advertisement information is to be exposed from a user device of an advertising user, and to restrict the target area on the basis of a degree of proximity to the verified area determined for the advertising user by the area verification unit; and
a transaction provision unit configured to expose the advertisement information to a target user for whom the target area is determined to be the verified area, among the at least one user.

2. The direct transaction platform system of Claim 1, wherein the at least one area includes at least one first area defined by a first division, and at least one second area defined by a second division smaller than the first division, and
wherein the advertisement reception unit is further configured to present the advertising user with an area corresponding to a division selected by the advertising user, among the first area and the second area, to allow selection of the target area.

3. The direct transaction platform system of Claim 2, wherein the advertisement reception unit is further configured to present the advertising user with the first area in a predetermined number when the advertising user selects the first division, and to present the advertising user with the second area in a number greater than the predetermined number when the advertising user selects the second division.

4. The direct transaction platform system of Claim 1, wherein the advertisement reception unit is further configured to sort and present the advertising user with the at least one area in order of proximity to the verified area of the advertising user to allow selection of the target area.

5. The direct transaction platform system of Claim 1, wherein the transaction provision unit is further configured to receive transaction information including a transaction request or item information for a direct transaction from the at least one user, and to provide the advertisement information to the target user together with the transaction information received from other users by the transaction provision unit.

6. The direct transaction platform system of Claim 1, wherein the advertisement information includes category information of an advertised item, and
wherein the advertisement reception unit is further configured to change a reference value of the degree of proximity for determining the target area on the basis of the category information.

7. The direct transaction platform system of Claim 1, wherein the area verification unit is further configured to request the location information for determining the verified area from the user device of the at least one user, when a predetermined amount of time elapses after the verified area is determined for the at least one user.

8. An advertising method using a direct transaction platform, comprising the steps of:
storing, in a direct transaction platform system, information on at least one area defined by a predetermined division;
communicating, by the direct transaction platform system, with a user device of at least one user to receive location information of the user device from the user device;
determining, by the direct transaction platform system, a verified area from among the at least one area for each of the at least one user, using the received location information;
receiving, by the direct transaction platform system, advertisement information and information on a target area where the advertisement information is to be exposed from a user device of an advertising user; and
exposing, by the direct transaction platform system, the advertisement information to a target user for whom the target area is determined to be the verified area, among the at least one user,
wherein the step of receiving the information on the target area comprises the step of restricting the target area on the basis of a degree of proximity to the verified area determined for the advertising user.

9. The advertising method of Claim 8, wherein the at least one area includes at least one first area defined by a first division, and at least one second area defined by a second division smaller than the first division, and
wherein the step of receiving the information on the target area comprises the step of presenting, by the direct transaction platform system, the advertising user with an area corresponding to a division selected by the advertising user, among the first area and the second area, to allow selection of the target area.

10. The advertising method of Claim 9, wherein the presenting step comprises the step of presenting the advertising user with the first area in a predetermined number when the advertising user selects the first division, and presenting the advertising user with the second area in a number greater than the predetermined number when the advertising user selects the second division.

11. The advertising method of Claim 8, wherein the step of receiving the information on the target area comprises the step of sorting and presenting the advertising user with the at least one area in order of proximity to the verified area of the advertising user to allow selection of the target area.

12. The advertising method of Claim 8, further comprising the step of receiving, by the direct transaction platform system, transaction information including a transaction request or item information for a direct transaction from the at least one user, and
wherein the step of exposing the advertisement information comprises the step of providing the advertisement information to the target user together with the transaction information received from other users by the direct transaction platform system.

13. The advertising method of Claim 8, wherein the advertisement information includes category information of an advertised item, and
wherein the step of restricting the target area comprises the step of changing a reference value of the degree of proximity for determining the target area on the basis of the category information.

14. The advertising method of Claim 8, further comprising the step of requesting, by the direct transaction platform system, the location information for determining the verified area from the user device of the at least one user, when a predetermined amount of time elapses after the verified area is determined for the at least one user.

15. A computer program stored on a computer-readable recording medium to execute the advertising method of any one of Claims 8 to 14 in combination with hardware.
